# EUROPEAN PATENT SPECIFICATION

(11) **EP 2 229 511 B1**
(45) Date of publication and mention of the grant of the patent: **29.08.2018**
(21) Application number: 08870813.6
(22) Date of filing: 15.12.2008
(51) Int. Cl.: F01N 3/28, F01N 3/20, F01N 3/025, B01D 53/94

(54) **METHOD AND APPARATUS FOR OPERATING AN EMISSION ABATEMENT ASSEMBLY**
VERFAHREN UND VORRICHTUNG FÜR DEN BETRIEB EINER EMISSIONSVERMINDERUNGSANORDNUNG
PROCÉDÉ ET APPAREIL D'EXPLOITATION D'UN ENSEMBLE DE LIMITATION DES REJETS

(30) Priority: 15.01.2008 US 14603
(43) Date of publication of application: 22.09.2010
(73) Proprietor: EMCON Technologies LLC, Wilmington, DE 19801 (US)
(72) Inventor: PARRISH, Tony R., Columbus Indiana 47203 (US)
(74) Representative: Prinz & Partner mbB
(86) International application number: PCT/US2008/086746
(87) International publication number: WO 2009/091469

(56) References cited:
- EP-A1- 0 590 699
- EP-A2- 0 396 164
- WO-A1-99/17005
- DE-A1-102005 039 630
- JP-A- 5 240 023
- JP-A- 9 310 850
- US-A1- 2004 040 290
- US-A1- 2005 150 217
- US-A1- 2005 153 252
- US-B1- 6 314 722

## Description

The present disclosure relates generally to diesel emission abatement devices and methods of operating an emission abatement system.

Untreated internal combustion engine emissions (e.g., diesel emissions) include various effluents such as oxides of nitrogen (NOx), hydrocarbons, and carbon monoxide, for example. Moreover, the untreated emissions from certain types of internal combustion engines, such as diesel engines, also include particulate carbon-based matter or "soot". Federal regulations relating to soot emission standards are becoming more and more rigid thereby furthering the need for devices and/or methods which remove soot from engine emissions.

The amount of soot released by an engine system can be reduced by the use of an emission abatement device such as a filter or trap. Such a filter or trap is periodically regenerated in order to remove the soot therefrom. The filter or trap may be regenerated by use of a burner or electric heater to burn the soot trapped in the filter.

Selective catalytic reduction (SCR) is used for NOx reduction in internal combustion engine exhaust. The efficiency of NOx reduction of an SCR catalyst is based upon the temperature of exhaust gas being exposed thereto. Exhaust gas is typically at low-efficiency temperatures during low-load conditions. Heat sources have been used to raise the temperature of the exhaust gas to a level allowing the SCR catalyst to perform more efficiently.

DE 10 2005 039 630 A1 discloses an emission abatement system having an SCR catalyst disposed downstream of a reactor configured to produce ammonia as a reaction product. Ammonia together with the exhaust gas flow out of the reactor where ammonia acts as the catalyst to remove nitric oxides from the exhaust gases. The amount of fuel supplied to the burner is regulated by a controllable injection nozzle. The temperature of the burner is controlled by a controller, for example for the regeneration of a particulate filter. The stoichiometric ratio is controlled by adjusting the amount of fuel supplied while maintaining constant air/oxygen supply.

According to the present invention, a method of operating an emission abatement system having a selective catalytic reduction (SCR) catalyst are provided as defined in claim 1.

An emission abatement assembly is also provided according to the present invention as defined in claim 5.

A fuel-fired burner is positioned upstream of the SCR catalyst and operable to heat exhaust gas being advanced to the SCR catalyst. A first sensor is configured to determine a flow rate of fuel being supplied to the burner and generate a response thereto. The emission abatement assembly further includes an electronically-controlled fuel delivery assembly operable to deliver fuel to the burner and a controller electrically coupled to the fuel delivery assembly. The controller includes a processor and a memory device electrically coupled to the processor. The memory device has stored therein a plurality of instructions which, when executed by the processor, cause the processor to determine a flow rate of fuel based upon the signal generated by the first sensor to predict the amount of fuel to be further supplied to the burner based upon the determined fuel flow rate. The processor operates the fuel delivery assembly to supply the predicted amount of fuel to the burner based upon the determined fuel flow rate.

### BRIEF DESCRIPTION OF THE DRAWINGS

FIG. 1 is a rear elevational view of an on-highway truck with an emission abatement assembly installed thereon;
FIG. 2 is a perspective view of an emission abatement assembly;
FIG. 3 is an elevational view of the end of the emission abatement assembly as viewed in the direction of the arrows of line 3-3 of FIG. 2;
FIG. 4 is a cross sectional view of the emission abatement assembly of FIG. 2 taken along the line 4-4 of FIG. 3, as viewed in the direction of the arrows, note that the filter housing and the collector housing are not shown in cross section for clarity of description;
FIG. 5 is an enlarged cross sectional view of the fuel-fired burner of the emission abatement assembly of FIG. 4;
FIG. 6 is an enlarged cross sectional view of the mixing baffle of the fuel-fired burner of FIGS. 2-5;
FIG. 7 is a diagrammatic internal top view of a fuel-fired burner;
FIG. 8 is a diagrammatic internal top view of an alternative fuel-fired burner;
FIG. 9 is a block diagram of an illustrative emission abatement assembly;
FIG. 10 is a flowchart of a control routine for operating a fuel-fired burner in an emission abatement assembly;
FIG. 11 is a flowchart of another control routine for operating a fuel-fired burner in an emission abatement assembly;
FIG. 12 is a flowchart of another control routine for operating a fuel-fired burner in an emission abatement assembly; and
FIG. 13 is a flowchart of another control routine for operating a fuel-fired burner in an emission abatement assembly.

### DETAILED DESCRIPTION OF THE DRAWINGS

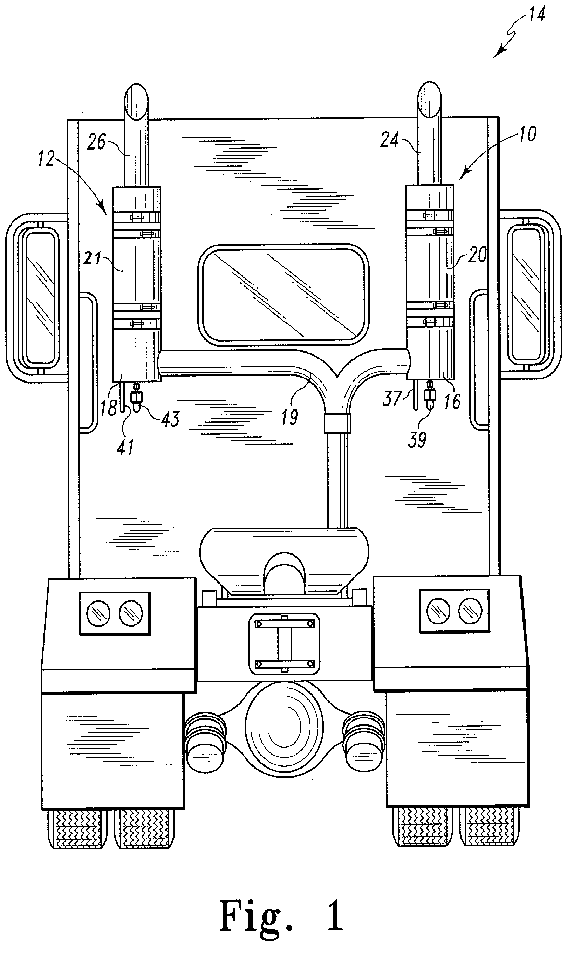

As will herein be described in more detail, FIG. 1 illustratively shows emission abatement assemblies 10, 12 for use with an internal combustion engine, such as the diesel engine of an on-highway truck 14. As illustratively shown in FIG. 1, each of the emission abatement assemblies 10, 12 has a fuel-fired burner 16, 18 and a particulate filter 20, 21, respectively. The fuel-fired burners 16, 18 are positioned upstream (relative to exhaust gas flow from the engine) from the respective particulate filters 20, 21. During operation of the engine, exhaust gas flows through a split exhaust gas inlet pipe 19 before entering the emission abatement assemblies 10, 12, and thus the particulate filters 20, 21 thereby trapping soot in the filters. Treated exhaust gas is released into the atmosphere through exhaust pipes 24, 26. From time to time during operation of the engine, the fuel-fired burner 16 regenerates the particulate filter 20 and the fuel-fired burner 18 regenerates the particulate filter 21. Also shown in FIG. 1 are fuel lines 37, 41 and air lines 39, 43 for the emission abatement assemblies 10, 12, respectively.

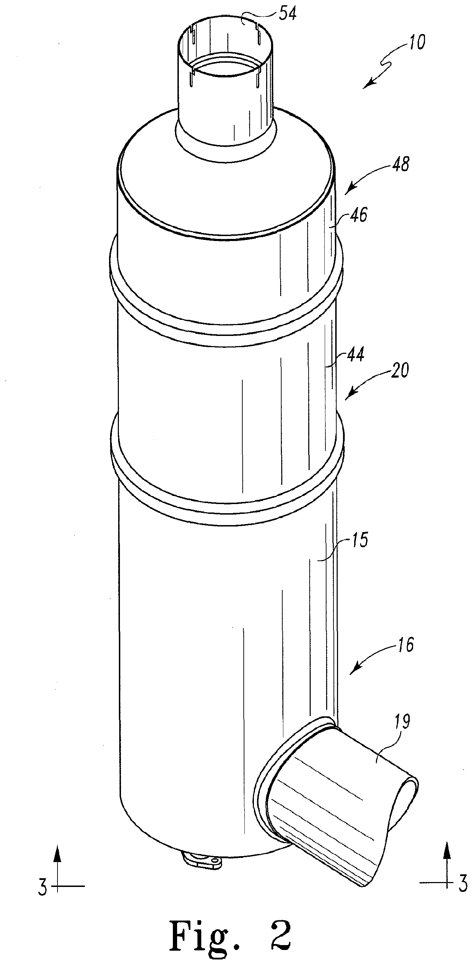

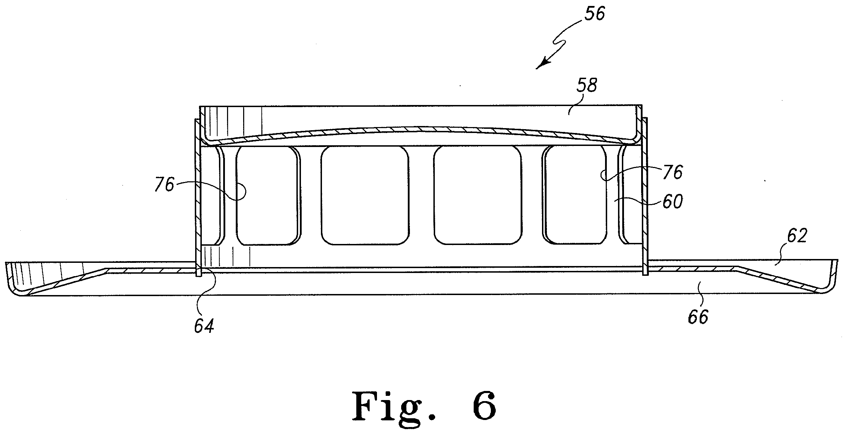

Referring now to FIGS. 2-6, the emission abatement assembly 10 is shown in greater detail. It should be appreciated that the emission abatement assembly 10 is substantially identical to the emission abatement assembly 12. As such, the discussion relating to the emission abatement assembly 10 of FIGS. 2-6 is relevant to the emission abatement assembly 12.

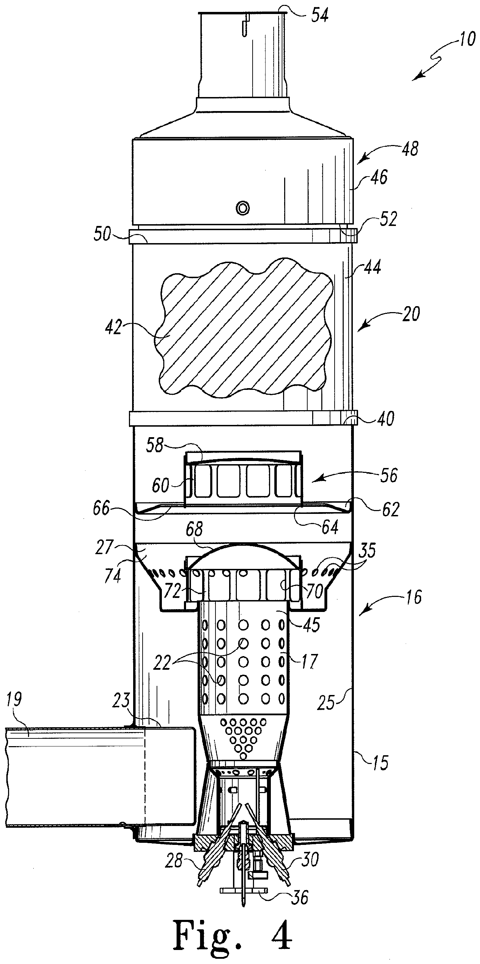

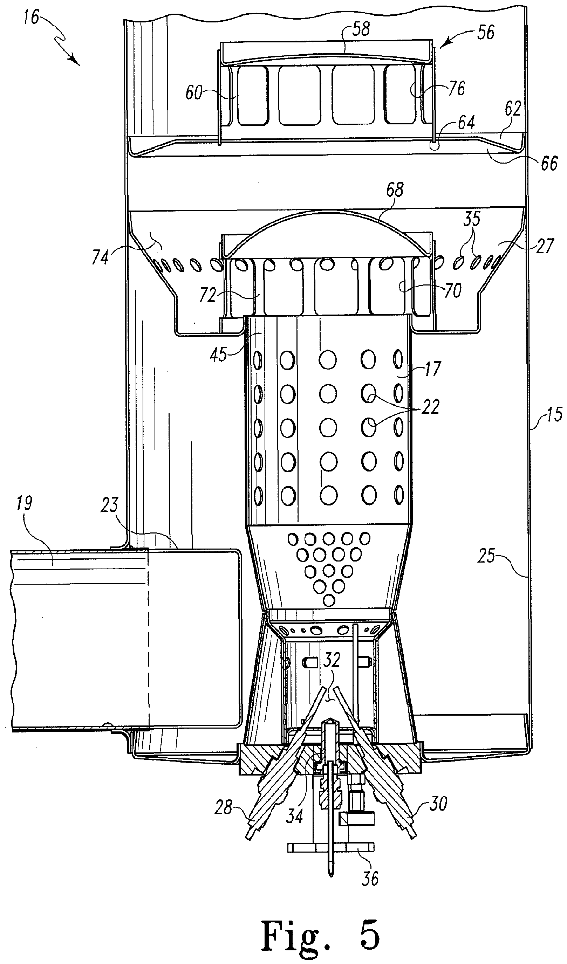

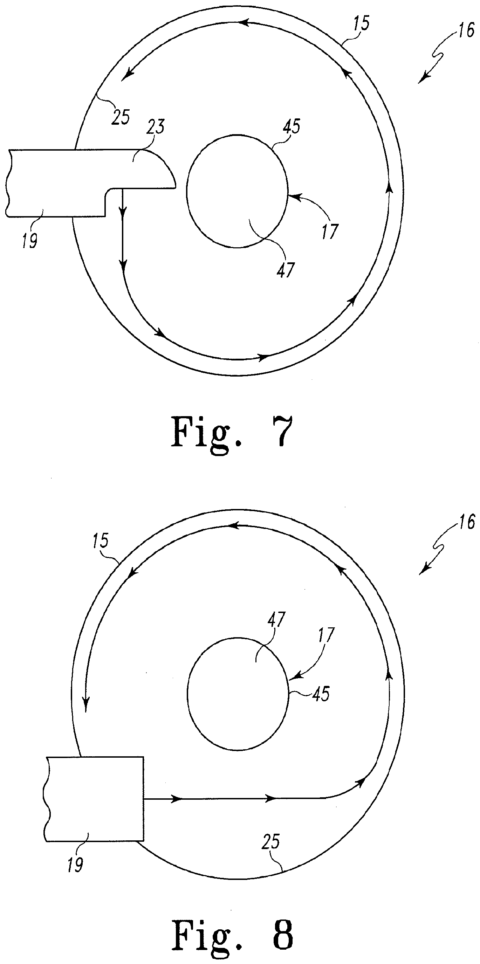

As shown in FIGS. 4 and 5, the fuel-fired burner 16 includes a housing 15 having a combustion chamber 17 positioned therein. The exhaust gas inlet pipe 19 is illustratively shown in FIGS. 4 and 5 as being disposed through the housing 15 allowing the pipe 19 to conduct exhaust gas from a diesel engine (not shown) into the housing 15. The pipe 19 includes an elbow 23 disposed on an outlet end positioned in the housing 15. The elbow 23 allows exhaust gas flowing through the pipe 19 to be directed toward a wall 25 of the housing 15 to impinge upon the wall 25 prior to reaching the combustion chamber 17. FIG. 7 shows a diagrammatic internal top view (with respect to the orientation shown in FIG. 1) of the fuel-fired burner 16, which illustrates a manner in which the exhaust gas flows into the housing 15 and impinges upon the wall 25. As indicated by the arrows, the exhaust gas, upon impinging the wall 25, flows in a swirling pattern as the exhaust gas also flows downstream (relative to exhaust gas flow) through the housing 15 towards the filter 20.

Again referring to FIGS. 4 and 5, the combustion chamber 17 includes a wall 45 circumscribing a space 47 where the flame of the burner 16 is positioned. The wall 45 is open at its end proximate to the filter 20 with the wall 45 including a number of gas inlet openings 22 defined therein. The exhaust gas is permitted to flow into the combustion chamber 17 through the inlet openings 22. In such a way, a flame present inside the combustion chamber 17 is protected from the full engine exhaust gas flow, while controlled amounts of engine exhaust gas are permitted to enter the combustion chamber 17 to provide oxygen to facilitate combustion of the fuel supplied to the burner 16. Directing the exhaust gas through the elbow 23 such that it is not exiting the pipe 19 directly toward the combustion chamber 17 further protects the flame. As the exhaust gas impinges upon the wall 25 and swirls through the housing 15, the exhaust gas will diffuse such that a portion of it enters the combustion chamber 17. The exhaust gas not entering the combustion chamber 17 is directed through a number of openings 35 defined in a shroud 27.

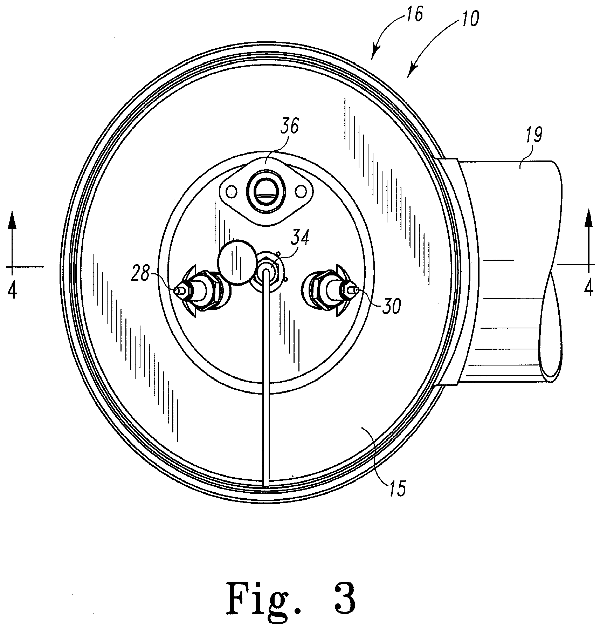

The fuel-fired burner 16 also includes an electrode assembly having a pair of electrodes 28, 30 as illustratively shown in FIGS. 3-5. When power is applied to the electrodes 28, 30, a spark is generated in the gap 32 between the electrodes 28, 30. Fuel flows from the fuel line 37 and enters the fuel-fired burner 16 through a fuel inlet nozzle 34 and is advanced through the gap 32 between the electrodes 28, 30 thereby causing the fuel to be ignited by the spark generated by the electrodes 28, 30. It should be appreciated that the fuel entering the nozzle 34 is generally in the form of a controlled air/fuel mixture.

The fuel-fired burner 16 also includes a combustion air inlet 36. An air pump, or other pressurized air source such as the truck's turbocharger or air brake system, generates a flow of pressurized air which is advanced to the combustion air inlet 36. During regeneration of the particulate filter 20, a flow of air is introduced into the fuel-fired burner 16 through the air line 39 and the combustion air inlet 36 to provide oxygen (in addition to oxygen present in the exhaust gas) to sustain combustion of the fuel.

As shown in FIG. 4, the particulate filter 20 is positioned downstream from the outlet 40 of the housing 15 of the fuel-fired burner 16. The particulate filter 20 includes a filter substrate 42. As shown in FIG. 4, the substrate 42 is positioned in a filter housing 44. The filter housing 44 is secured to the burner housing 15. As such, gas exiting the burner housing 15 is directed into the filter housing 44 and through the substrate 42. The particulate filter 20 may be any type of commercially available particulate filter. For example, the particulate filter 20 may be embodied as any known exhaust particulate filter such as a "deep bed" or "wall flow" filter. Deep bed filters may be embodied as metallic mesh filters, metallic or ceramic foam filters, ceramic fiber mesh filters, and the like. Wall flow filters, on the other hand, may be embodied as a cordierite or silicon carbide ceramic filter with alternating channels plugged at the front and rear of the filter thereby forcing the gas advancing therethrough into one channel, through the walls, and out another channel. Moreover, the filter substrate 42 may be impregnated with a catalytic material such as, for example, a precious metal catalytic material. The catalytic material may be, for example, embodied as platinum, rhodium, palladium, including combinations thereof, along with any other similar catalytic materials. Use of a catalytic material lowers the temperature needed to ignite trapped soot particles.

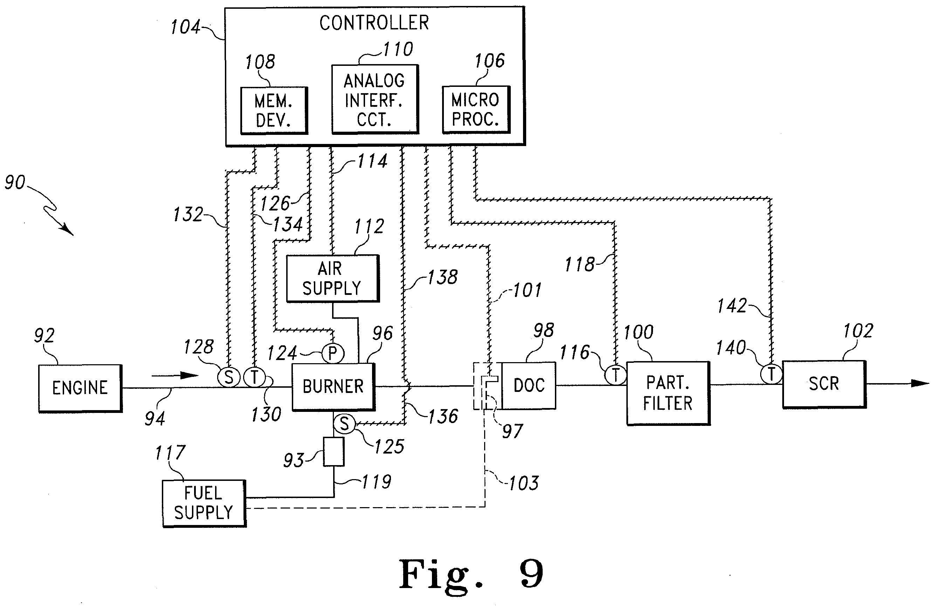

The filter housing 44 is secured to a housing 46 of a collector 48. Specifically, an outlet 50 of the filter housing 44 is secured to an inlet 52 of the collector housing 46. As such, processed (i.e., filtered) exhaust gas exiting the filter substrate 42 (and hence the filter housing 44) is advanced into the collector 48. The processed exhaust gas is then advanced through a gas outlet 54. In FIG. 1, the gas outlet 54 is coupled to the exhaust pipe 24, which conducts the processed exhaust gas into the atmosphere. However, it should be appreciated that the gas outlet 54 may be coupled to a subsequent emission abatement device (e.g., see FIG. 9) allowing further exhaust gas processing prior to the exhaust gas being released into the atmosphere if the engine's exhaust system is equipped with such a device.

Referring again to FIGS. 4-6, a mixing baffle 56 is positioned in the burner housing 15. The mixing baffle 56 is positioned between the shroud 27 and the outlet 40 of the burner housing 15. In the illustrative embodiment described herein, the mixing baffle 56 includes a domed diverter plate 58, a perforated annular ring 60, and a collector plate 62. As shown in FIGS. 4 and 5, the collector plate 62 is welded or otherwise secured to the inner surface of the burner housing 15. The collector plate 62 has a hole 64 in the center thereof. The perforated annular ring 60 is welded or otherwise secured to the collector plate 62. The inner diameter of the annular ring 60 is larger than the diameter of the hole 64. As such, the annular ring 60 surrounds the hole 64 of the collector plate 62. The diverter plate 58 is welded or otherwise secured to the end of the annular ring 60 opposite to the end that is secured to the collector plate 62. The diverter plate 58 is solid (i.e., it does not have holes or openings formed therein), and, as such, functions to block the flow of exhaust gas linearly through the mixing baffle 56. Instead, the diverter plate 58 diverts the flow of exhaust gas radially outwardly.

The mixing baffle 56 functions to mix the hot flow of exhaust gas directed through the combustion chamber 17 and cold flow of exhaust gas that bypasses the combustion chamber 17 during filter regeneration thereby introducing a mixed flow of exhaust gas into the particulate filter 20. In particular, as described above, the flow of exhaust gas swirling in the combustion chamber housing 15 (see FIG. 7) is split into two flows - (i) a cold bypass flow which bypasses the combustion chamber 17 and is advanced through the openings 35 of the shroud 27 and, (ii) a hot combustion flow which flows into the combustion chamber 17 where it is significantly heated by the flame present therein. The mixing baffle 56 forces both flows together through a narrow area and then causes such a concentrated flow to then flow radially outwardly thereby mixing the two flows together. To do so, the cold flow of exhaust gas advances through the openings 35 in the shroud 27 and thereafter is directed into contact with the upstream face 66 of the collector plate 62. The shape of the collector plate 62 directs the cold flow toward hole 64.

Likewise, the hot flow of exhaust gas is directed toward the hole 64 of the collector plate 62. In particular, the hot flow of exhaust gas is prevented from axially exiting the combustion chamber 17 by a domed flame catch 68. The flame catch 68 forces the hot flow of exhaust gas radially outwardly through a number of openings 70 defined in a perforated annular ring 72, which is similar to the perforated annular ring 60 of the mixing baffle 56. The hot flow of exhaust gas is then directed toward the upstream face 66 of the collector plate 62 by a combination of surfaces including the downstream face 74 of the shroud 27 and the wall 25 of the burner housing 15. The hot flow of exhaust gas then contacts the upstream face 66 of the collector plate where the shape of the plate 62 causes the hot flow of exhaust gas to be directed toward the hole 64. This begins the mixing of the hot flow of exhaust gas with the cold flow of exhaust gas.

Mixing is continued as the cold and hot flows of exhaust gas enter the hole 64 of the collector plate 62. The partially mixed flow of gases is directed into contact with the diverter plate 58. The diverter plate 58 blocks the linear flow of gases and directs them outwardly in radial directions away from the diverter plate 58. The flow of exhaust gas is then directed through a number of openings 76 formed in the perforated annular ring 72 of the mixing baffle 56. This radial outward flow of exhaust gas impinges on the inner surface of the burner housing 15 and is directed through the outlet 40 of the burner housing 15 and into the inlet of the filter housing 44 where the mixed flow of exhaust gas is utilized to regenerate the filter substrate 42.

Hence, the elbow 23 causes the exhaust gas entering the housing 15 to flow in a swirling manner while the exhaust gas flows downstream through the housing 15 as the exhaust gas is split into the bypass and combustion flow. The mixing baffle 56 forces the mixing of the non-homogeneous exhaust gas flow through a narrow area, and then causes the mixed flow to expand outwardly. Swirling the exhaust gas entering the housing 15 and forcing it through the mixing baffle 56, prevents the formation of a center flow or center jet of hot gas from being impinged on the filter substrate 42. This provides a more homogeneous mixture of the hot and cold flows created prior to introduction of the combined flow onto the face of the filter substrate thereby increasing filter regeneration efficiency and reducing the potential for filter damage due to hot spots. It should be appreciated that the elbow 23 and the mixing baffle 56 may be implemented separately, or together, as described herein.

FIG. 8 shows a diagrammatic internal top view of the emission abatement assembly 10 implementing an alternative housing 15 and exhaust gas inlet pipe configuration 19. In this illustrative configuration, the elbow 23 is eliminated and the pipe 19 is extended through an opening formed in the housing 15 such that the exhaust gas flowing through the pipe 19 is directed along the wall 25 upon entering the housing 15. This allows the exhaust flow to impinge upon the wall 25 along its flow path, which induces the flow of exhaust gas into a swirling pattern similar to that induced with the configuration shown in FIG. 7. Similar to the configuration shown in FIG. 7, the configuration of FIG. 8 may be implemented with the mixing baffle 56.

Referring now to FIG. 9, there is illustratively shown a diagrammatic view of an emission abatement assembly 90 used to abate emissions generated by an internal combustion engine 92. The emission abatement assembly 90 includes a fuel-fired burner 96 disposed downstream of the engine 92 along the exhaust path 94, the engine 92 being a diesel engine in this illustrative embodiment. The emission abatement assembly 90 further includes a diesel oxidation catalyst (DOC) 98 positioned downstream of the burner 96 and a particulate filter 100 positioned downstream of the DOC 98 along the exhaust path 94. The emission abatement assembly 90 further includes a selective catalytic reduction (SCR) catalyst 102 positioned downstream of the filter 100. It should be appreciated that the burner 96 and the filter 100 are substantially identical to the burner 16 and the filter 20 previously described, thus names and reference numerals of like components associated with the burner 16 and the filter 20 previously described will be used in regard to the description of the burner 96 and the filter 100.

Also shown in FIG. 9 is an electronic control unit (ECU) or "electronic controller" 104. The electronic controller 104 is typically positioned in a housing and located internally of the truck 14 as previously discussed in regard to FIG. 1. The electronic controller 104 is, in essence, the master computer responsible for interpreting electrical signals sent by sensors associated with the emission abatement assembly 90 (and in some cases, the engine 92) and for activating electronically-controlled components associated with the emission abatement assembly 90. For example, the electronic controller 104 is operable to, amongst many other things, determine when the particulate filter 100 of the emission abatement assembly 90 is in need of regeneration, calculate and control the amount and ratio of air and fuel to be introduced into the fuel-fired burner 96, determine the temperature in various locations within the emission abatement assembly 90, operate numerous air and fuel valves, and communicate with an engine control unit (not shown) associated with the engine 92 of the truck 14. It should be appreciated that the electronic controller 104 can also determine which emission abatement assembly 90 needs to be regenerated in a dual arrangement similar to that described in regard to FIG. 1.

To carry out these tasks, the electronic controller 104 includes a number of electronic components commonly associated with electronic units utilized in the control of electromechanical systems. For example, the electronic controller 104 may include, amongst other components customarily included in such devices, a processor such as a microprocessor 106 and a memory device 108 such as a programmable read-only memory device ("PROM") including erasable PROM's (EPROM's or EEPROM's). The memory device 108 is provided to store, amongst other things, instructions in the form of, for example, a software routine (or routines) which, when executed by the processor 106, allows the electronic controller 104 to control operation of the emission abatement assembly 90.

The electronic controller 104 also includes an analog interface circuit 110. The analog interface circuit 110 converts the output signals from the various sensors (e.g., temperature sensors) into a signal, which is suitable for presentation to an input of the microprocessor 106. In particular, the analog interface circuit 110, by use of an analog-to-digital (A/D) converter (not shown) or the like, converts the analog signals generated by the sensors into a digital signal for use by the processor 106. It should be appreciated that the A/D converter may be embodied as a discrete device or number of devices, or may be integrated into the microprocessor 106. It should also be appreciated that if any one or more of the sensors associated with the emission abatement assembly 90 generate a digital output signal, the analog interface circuit 110 may be bypassed.

Similarly, the analog interface circuit 110 converts signals from the microprocessor 106 into an output signal which is suitable for presentation to the electrically-controlled components associated with the emission abatement assembly 90 (e.g., the fuel injectors, air valves, igniters, pump motor, etcetera). In particular, the analog interface circuit 110, by use of a digital-to-analog (D/A) converter (not shown) or the like, converts the digital signals generated by the processor 106 into analog signals for use by the electronically-controlled components associated with the emission abatement assembly 90. It should be appreciated that, similar to the A/D converter described above, the D/A converter may be embodied as a discrete device or number of devices, or may be integrated into the processor 106. It should also be appreciated that if any one or more of the electronically-controlled components associated with the emission abatement assembly 90 operate on a digital input signal, the analog interface circuit may be bypassed.

Hence, the electronic controller 104 may be operated to control operation of the fuel-fired burner 96. In particular, the electronic controller 104 executes a routine including, amongst other things, a closed-loop control scheme in which the electronic controller 104 monitors outputs of the sensors associated with the emission abatement assembly 90 to control the inputs to the electronically-controlled components associated therewith. To do so, the electronic controller 104 communicates with the sensors associated with the emission abatement assembly 90 to determine, amongst numerous other things, the temperature at various locations within the emission abatement assembly 90 and the pressure drop across the filter substrate 42 of the filter 100. Armed with this data, the electronic controller 104 performs numerous calculations each second, including looking up values in preprogrammed tables, in order to execute algorithms to perform such functions as determining when or how long the fuel injectors are operated, controlling the power level input to the electrodes 28, 30 of the burner 96, controlling the air advanced through a combustion air inlet 36, etcetera.

It should be appreciated that the electronic controller 104 may communicate directly with the various sensors associated with the emission abatement assembly 90, or may obtain the output from the sensors from an engine control unit (not shown) associated with the engine 92 via a controller area network (CAN) interface (not shown), known to those of skill in the art. Alternatively, exhaust mass flow may be calculated by the electronic controller 104 in a conventional manner by use of engine operation parameters such as engine RPM, turbo boost pressure, and intake manifold temperature (along with other known parameters such as engine displacement). It should be appreciated that the electronic controller 104 may itself calculate the mass flow, or may obtain the calculated mass flow from the engine control unit of the engine 92 via the CAN interface.

As previously discussed, during operation of the engine 92, the filter 100 eventually becomes full of soot from filtering the exhaust gas generated by the engine 92 and needs to be regenerated in order to continue filtering effectively. The processor 106 can be programmed to control the burner 96 based upon predetermined time intervals, event sensing, or other triggering occurrences known to those in the art. Once the fuel-fired burner 96 is activated, it begins to produce heat. Such heat is directed downstream (relative to exhaust gas flow) and into contact with the upstream face of the particulate filter 100. The heat ignites and burns soot particles trapped in the filter substrate 42 thereby regenerating the particulate filter 100. Illustratively, heat in the range of 600-650 degrees Celsius may be sufficient to regenerate a non-catalyzed filter, whereas heat in the range of 300-350 degrees Celsius may be sufficient to regenerate a catalyzed filter.

The DOC 98 may be positioned upstream of the particulate filter 100. The DOC 98 (or any other type of oxidation catalyst) may be used to oxidize any unburned hydrocarbons and carbon monoxide (CO) thereby generating additional heat which is transferred downstream to the filter 100. An injector 97 may optionally be implemented, shown in FIG. 9 as being positioned upstream of the DOC 98, which is connected to the controller 104 through control line 101 and the fuel supply 117 through a fuel line 103. This allows diesel fuel to be injected onto the DOC 98, allowing the DOC 98 to catalyze a reaction between the injected fuel and oxygen present in the exhaust gas flowing therethrough to generate heat as well. Alternatively, the emission abatement assembly 90 may be configured without the DOC 98.

In an illustrative embodiment, regeneration of the particulate filter 100 may take only a few minutes. Moreover, it should be appreciated that regeneration of the particulate filter 100 may be self-sustaining once initiated by heat from the burner 96, respectively. Specifically, once the filter 100 is heated to a temperature at which the soot particles trapped therein begin to ignite, the ignition of an initial portion of soot particles trapped therein can cause the ignition of the remaining soot particles much in the same way a cigar slowly burns from one end to the other. In essence, as the soot particles "burn," an amount of heat is released in the "burn zone." Locally, the soot layer (in the burn zone) is now much hotter than the immediate surroundings. As such, heat is transferred to the as yet un-ignited soot layer downstream of the burn zone. The energy transferred may be sufficient to initiate oxidation reactions that raise the un-ignited soot to a temperature above its ignition temperature. As a result of this, heat from the fuel-fired burner 96 may only be required to commence the regeneration process of the filter 100 (i.e., begin the ignition process of the soot particles trapped therein).

During its operation, the burner 96 receives an air/fuel mixture, which can be controlled through control of a fuel injector 93 and the addition of combustion air through combustion air inlet 36 of the burner 96. As illustratively shown in FIG. 9, the burner 96 receives fuel from the fuel supply 117 through the fuel line 119. The burner 96 also receives oxygen for burning that is present in the exhaust gas flowing therethrough. It is desirable to avoid overfueling the burner 96, which occurs when more fuel is supplied to the burner 96 than can be oxidized due to a lack of oxygen available for complete oxidation. Furthermore, it is desirable to supply an amount of fuel to the burner 96 such that the flame in the combustion chamber is stable. In order to determine the proper amount of fuel to supply in order to avoid overfueling and to maintain flame stability, the amount of oxygen actually "useable" by the burner 96 can be found.

Exhaust gas generated by the engine 92 typically contains some amount of oxygen that can be supplied downstream to the burner 96 during its operation. This amount can be theoretically determined based upon mass flow calculations of the amount of air and fuel being supplied to the engine 92. In other words, by calculating the amount of air and fuel being supplied to the engine at a given operating condition, the amount of residual air available in the exhaust gas can be theoretically calculated. This theoretically calculated value is typically referred to in the art as the amount of "available oxygen" in the exhaust gas stream. However, in reality, the entirety of this theoretical amount of available oxygen in the exhaust gas is not truly usable for combustion by the burner 96. This is true for a number of reasons. For example, engine exhaust gas tends to be stratified, and in some cases highly stratified. As a result, a significant amount of oxygen may be trapped in a layer within a stratified flow thereby making it unusable for combustion by the burner 96. Moreover, certain gases present in the exhaust gas, such as CO and CO₂, absorb a portion of the heat being generated by the burner 96, thereby extracting energy necessary for combustion. In the presence of such instantaneous cool conditions, oxygen in the exhaust gas can go unused. In short, for numerous different reasons, not all of the oxygen present in the exhaust gas can be used for oxidation by the burner 96.

Any fueling calculation that bases fueling of the burner 96 on the theoretical amount of available oxygen will generally result in overfueling. As a result, the illustrative system and method described herein bases fueling calculations on an empirically-generated amount of usable oxygen in the exhaust gas. Thus, for purposes of this disclosure, the term "useable oxygen" means an empirically-generated amount of oxygen in the exhaust gas of an engine that is produced at a given operating condition of the engine that can actually be used by the burner of an emission abatement assembly, with such an empirically-generated amount being less than the theoretically-calculated amount of available oxygen in the engine exhaust gas based on mass flow calculations of the air and fuel being supplied to the engine at the same operating condition of the engine. Fueling calculations based on the amount of usable oxygen in the exhaust gas stream can be used to produce air/fuel mixtures having desirable air-to-fuel ratios (e.g., stoichiometric) for operation of the burner 96 without the concern for overfueling relative to similar fueling calculations based on the theoretically-calculated amount of available oxygen in the exhaust gas stream. Fueling calculations based on the amount of usable oxygen in the exhaust gas stream can also be used to produce more stable flames in the burner 96 relative to the calculations in which the amount of oxygen in the exhaust gas stream is assumed to be artificially low to avoid overfueling.

During operation of the burner 96, the amount of useable oxygen present in the exhaust gas may not be sufficient to allow the burner 96 to generate enough heat to regenerate the particulate filter 100. However, supplemental oxygen from the air supply 112 can be supplied to the burner 96 in a similar manner to as discussed in regard to FIGS. 3-5. The air supply 112 may be implemented through various forms, such as an air pump, a turbocharger of the engine 92, or the truck's air brake system. An air flow sensor line 114 can be used to relay to the controller 104 the amount of air, and thus, the amount of oxygen supplied by the air supply 112. Typically, it is assumed that all of the oxygen supplied by the air supply 112 is consumed in combustion by the burner 96. Thus, the amount of fuel supplied to the burner 96 can be controlled based upon the amount of useable oxygen present in the exhaust gas and the amount of oxygen available from the air supply 112.

To properly control the fueling of the burner 96, the amount of useable oxygen present in the exhaust gas from the engine 92 may be determined. This can be done empirically in a test cell by operating the engine 92 and the burner 96 across a range of operating conditions. To do so, the engine 92 is operated at a given operating condition in the test cell, and the theoretically-calculated amount of available oxygen in the engine exhaust gas is determined for the given operating condition. Oxygen from the air supply 112 is also supplied to the burner 96 in a controlled, known quantity. Fuel is supplied to the burner 96 in an amount which should provide a desired air-to-fuel ratio (e.g., stoichiometric) based on the total oxygen in the exhaust gas (i.e., the sum of the theoretically-calculated amount of available oxygen in the exhaust gas and the known amount supplied by the air supply 112). An oxygen sensor is used to sense the amount of oxygen present in the exhaust gas stream downstream of the burner. Since it is assumed that all of the oxygen supplied to the burner 96 from the air supply 112 is consumed, the amount of oxygen sensed in the exhaust gas stream downstream of the burner 96 represents the amount of oxygen in the engine exhaust gas that is not consumed (i.e., the amount of oxygen in the engine exhaust gas that is for one reason or another "unusable" by the burner). The amount of "useable oxygen" is the difference between the amount of oxygen present in exhaust gas upstream of the burner 96 and the amount of oxygen sensed in the exhaust gas downstream of the burner 96. In other words, the amount of "useable oxygen" is the difference between the amount of total oxygen in the exhaust gas (i.e., the sum of the theoretically-calculated amount of available oxygen in exhaust gas and the known amount supplied from the air supply 112) and the amount of "unusable" oxygen in the exhaust gas (i.e., the sensed amount of oxygen present in the exhaust gas downstream of the burner 96).

It should be appreciated that this measurement may be repeated across a range of operating conditions of the engine 92. For example, the amount of useable oxygen can be determined for various engine speeds and loads. The resulting data may be used to create an engine map for use by the electronic controller 104. Thus, fueling of the burner 96 may be controlled across a range of operating conditions based upon the engine map.

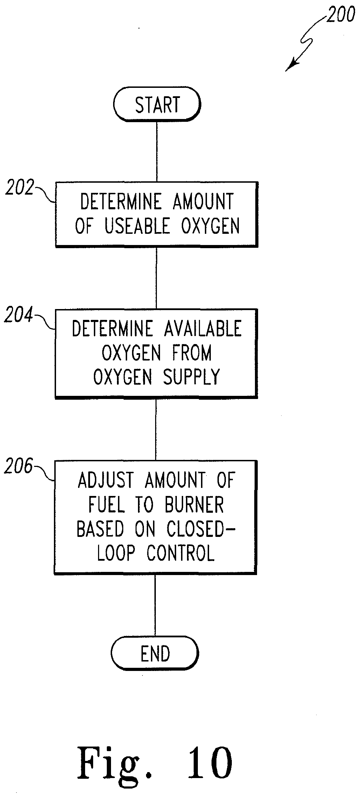

FIG. 10 shows an illustrative control routine 200, which can be used to control fueling to the burner 96 for regenerating the particulate filter 100 based upon the amount of useable oxygen present in the exhaust gas. The control routine 200 can be commenced based upon various triggering events, such as comparing the pressure across the filter 100 to a predetermined pressure threshold or expiration of a predetermined time interval, for example. Once the control routine 200 commences, operation 202 is performed, which determines the amount of useable oxygen present in the exhaust gas, such as in the manner previously described. In operation 204, the amount of oxygen being supplied from the air supply 112 is determined. The sensor line 114 transmits this data to the electronic controller 104 for processing. These quantities are used in operation 208, which adjusts the amount of fuel supplied to the burner 96 according to closed-loop control allowing the fueling to be continuously adjusted based upon the oxygen amounts calculated in operations 202 and 204. The control routine 200 can end according to a particular completion event recognized by the electronic controller 104, such as the completion of a predetermined condition or detection of a particular operating condition, such as the pressure drop across the substrate 42 of the particulate filter 100 measured through a pressure sensor 124 and transmitted through a sensor line 126.

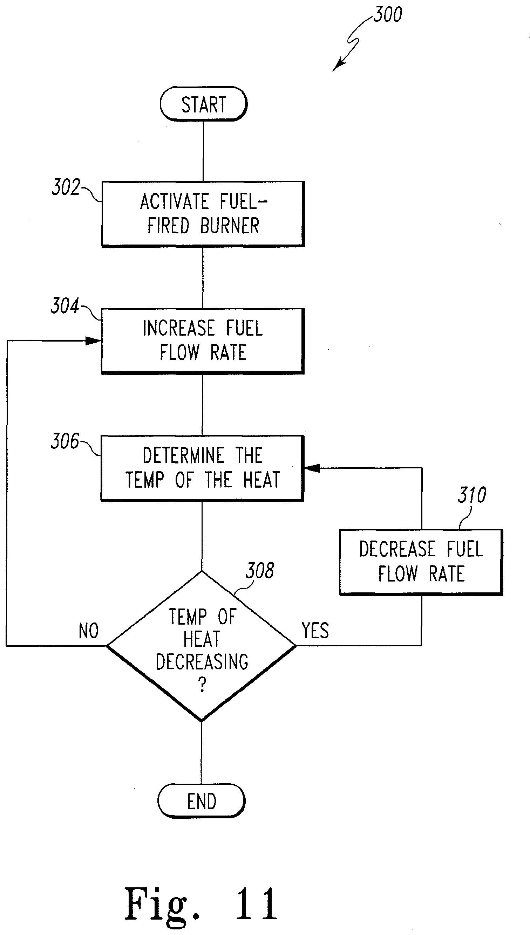

This control strategy can also be used with other control methods, such as that discussed in regard to FIG. 11. That is, the determination of useable oxygen can be used to set an upper, or maximum, limit on an amount of fuel to be supplied to the burner, while implementing another control strategy to control the burner 96 while operating under this limit. One such maximum fueling limit could be established at the level at which enough fuel is supplied to the burner 96 to consume the amount of useable oxygen in the exhaust gas and the amount provided from the air supply 112, which could be implemented as a dynamic upper limit that depends upon variables such as the operating conditions of the engine 92 and the amount of oxygen supplied by the air supply 112, for example.

Another method of avoiding overfueling of the burner 96 is to monitor the temperature of the heat generated by the burner 96, which can be done by determining the temperature of exhaust gas heated by the burner 96. In the illustrative embodiment of FIG. 9, a temperature sensor 116 is shown positioned at an inlet of the filter 100. The temperature sensor 116 generates a signal indicating the temperature of the exhaust gas entering the filter 100 and transmits the signal through sensor line 118 for processing by the electronic controller 104. The temperature of the heat generated by the burner 96 typically increases as fuel being supplied thereto is increased in quantity and as long as enough oxygen is present for burning. However, if not enough oxygen is present, overfueling occurs. The unburned fuel will absorb heat, using it for vaporization. With energy being taken out of the heated exhaust gas, the temperature of the exhaust gas flowing along the exhaust path 94 will decrease in temperature. Thus, when fuel being supplied to the burner 96 is being increased, but the temperature at the inlet of the filter 100 decreases, the electronic controller 104 can determine that overfueling has occurred. At that point, the fuel to the burner 96 can be reduced, which would likely result in the temperature increasing.

FIG. 11 shows an illustrative control routine 300 that can be used to control the burner 96 to avoid the overfueling scenario. Similar to control routine 200, the control routine 300 can commence based upon the triggering events, such as predetermined thresholds being reached or predetermined times occurring, such as previously discussed herein. Once the control routine 300 has commenced, operation 302 can occur in which the burner 96 is activated with an air/fuel mixture being supplied thereto. In operation 304, the flow rate of the fuel supplied to the burner 96 is increased to raise the temperature of the heat generated by the burner in order to reach temperatures sufficient for regenerating the filter 100.

In operation 306, the temperature of the heat generated by the burner 96 is determined using the temperature sensor 116 and the electronic controller 104. The determination of the heat temperature can be performed in various manners. For example, in one illustrative embodiment, the controller 104 can sample the temperature at the inlet of the filter 100 over some predetermined amount of time through the temperature sensor 116. These samples can be stored in the memory device 108.

The processor 106 can then determine if the temperature is decreasing over the predetermined amount of time, as is performed in operation 308. In other words, the processor 106 can trend the temperature over the predetermined amount of time to ensure that the decrease in temperature is occurring for a length of time long enough to determine that overfueling is occurring. If the temperature trend indicates that the temperature of the heat is not decreasing, the control routine 300 performs the operation 304 and continues to increase the flow rate of fuel supplied to the burner 96 to increase the temperature of the burner. If the temperature is determined to be decreasing, operation 310 is performed, which reduces the flow rate of fuel supplied to the burner 96. After a delay (not shown), operations 308 can again be performed to determine if the temperature of the heat is decreasing. After regeneration is deemed complete, or after some other condition occurs such as the completion of a predetermined time period, control routine 300 can end.

During operation of the engine 92, the temperature of the SCR catalyst 102 is controlled to remove NOx from the exhaust gas. In one illustrative embodiment, the SCR catalyst 102 is configured to have an operating range of 200-400 degrees Celsius. The exhaust gas flowing along the exhaust path 94 can be heated using the burner 96 before it reaches the SCR catalyst 102, which allows it to provide heat to the SCR catalyst 102 for operation. It is also desirable to keep the temperature of the SCR catalyst 102 from rising above the upper limit of its operating range to maintain its efficiency.

During use of the SCR catalyst 102, it may become difficult to control the temperature of the SCR catalyst 102 within its operating range due to a number of reasons. One reason, for example, may be that the components positioned between the burner 96 and the SCR catalyst 102, such as the DOC 98 and the filter 100, can absorb the heat being produced by the burner 96. Thus, without knowing how much heat the filter 100 will absorb, control of a temperature of the SCR catalyst 102 can become unpredictable. Also, typically a closed-loop control strategy is used, which, due to delay times in component response, may cause the upper limit of the SCR catalyst temperature range to be overshot.

One manner in which to control the temperature of the SCR catalyst 102 without consideration of the actual SCR catalyst temperature is to predict the amount of fuel required to heat the SCR catalyst 102 to within its operating range based upon the flow rate of fuel being provided to the burner. In one illustrative embodiment, a control strategy may be implemented using the integral of the fuel flow rate to the burner 96 (the amount of fuel). A sensor 125 and sensor line 136 are used to sense and transmit the fuel flow rate to the burner 96 to the electronic controller 104, where the integral can be determined with the microprocessor 106 providing the total amount of fuel currently supplied to the burner 96 from some predetermined previous point in time, such as when the burner is activated.

In another illustrative embodiment, other operating conditions may be implemented in order to predict the amount of fuel required to heat the SCR catalyst. For example, the normalized exhaust flow through the burner 96 and the temperature of the exhaust gas at the burner 96 inlet may be measured and implemented as variables. A sensor 128 is configured to sense the flow rate of the exhaust gas flowing through the burner. The sensor 128 transmits this data through sensor line 132 to the electronic controller 104. A temperature sensor 130 is configured to determine the temperature of the exhaust gas flowing through the burner 96 and transmit this data through a sensor line 134 to the electronic controller 104.

These operating conditions can then be used either separately or together to predict how much fuel will be needed by the burner 96 in order to supply an amount of heat to reach the operating range of the SCR catalyst 102 and maintain it within the range. Furthermore, various control strategies may be implemented using these operating conditions to predict the amount of fuel to be supplied to the burner 96. For example, in one illustrative embodiment, a fuzzy logic control strategy may be used. This control strategy analyzes analog input values in terms of logical variables that take on continuous values between 0 and 1. This allows the input values to have various states. The states may be defined as "membership functions" such that as an input variable gains membership in one state, it loses membership in another. Thus, transitioning states does not include discreet transitions from one state to another, but rather degrees of transition. In this example, the amount of fuel supplied to the burner may be one of these variables. As previously discussed, the flow rate of exhaust gas through the burner and the temperature of the exhaust gas flowing through the burner may also be variables. This fuzzy logic control strategy programmed into the memory device 108 of the controller 104 and executed by the processor 106. It should be appreciated that other control strategies may be implemented to predict the amount of fuel to be supplied to the burner 96, such as a Smith predictor strategy, as well as a bang-bang controller.

Referring again to FIG. 9, a temperature sensor 140 transmits the temperature of the SCR catalyst 102 through the sensor line 142. The temperature value provided by the sensor 140 can be used along with the control strategy described above to form an OR gate function. For example, while the prediction-based control model is used put the temperature of the SCR catalyst 102 into operating range, if the upper limit of the range is reached earlier than predicted, the temperature is observed by the electronic controller 104 and the burner 96 can be deactivated.

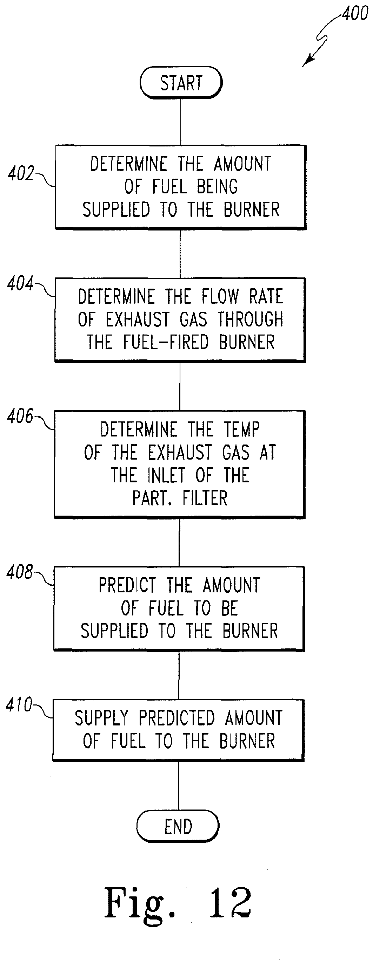

FIG. 12 shows one illustrative control routine 400 that can be used to adjust the SCR catalyst temperature to be within the operating temperature range. The control routine 400 can be commenced based upon some triggering event, a predetermined time, or can be commenced anytime the engine is started from a "cold start." Furthermore, the control routine 400 can be executed for determining when to turn the burner on or off or controlling the burner during operation as illustratively shown in FIG. 12. Once commenced, the illustrative control routine 400 performs operation 402, which determines the amount of fuel supplied to the burner 96. Operation 404 is then performed which determines the exhaust gas flow rate through the burner 96. Operation 406 is then performed, which determines the exhaust gas temperature at the inlet of the burner 96.

Once this data is collected, operation 408 can be performed, which determines the predicted amount of fuel to be provided to the burner 96. As discussed, this operation may be performed using various control strategies, such as fuzzy logic, for example. Operation 410 includes supplying the predicted amount of fuel to the burner 96. Operation of the burner 96 may be controlled in this manner for a period of time until the predicted amount of fuel has been provided to the burner. Once this operation period is complete, the control routine 400 can end.

During operation of the burner 96, the surfaces of electrodes 28, 30 can become fouled due to accumulation of soot or other matter thereon. Soot/matter accumulation can contribute to failed ignition of the burner. Once it has been determined that burner 96 is to be shutdown until further use, the air/fuel mixture being supplied to the burner can be adjusted to combust any soot or other matter accumulated on the electrodes 28, 30. The fuel being supplied to the burner 96 can be reduced, if necessary, in an attempt to force the air/fuel mixture to a ratio greater than stoiciometric. Providing a greater than stoiciometric, or lean, air-to-fuel ratio will raise the temperature around the electrodes to provide a hot enough environment to allow the various matter on the surface of the electrodes 28, 30 to combust. During operation of the burner, the electrodes 28, 30 are constantly being operated in order to maintain a flame within the burner 96. Thus, the sparking provides the ignition of the lean air/fuel mixture, which will burn off the soot. If the fueling of the burner 96 cannot be controlled so as to achieve a greater than stoichiometric air/fuel mixture, the air supply 112 can be used in order to increase the air-to-fuel ratio of the air/fuel mixture.

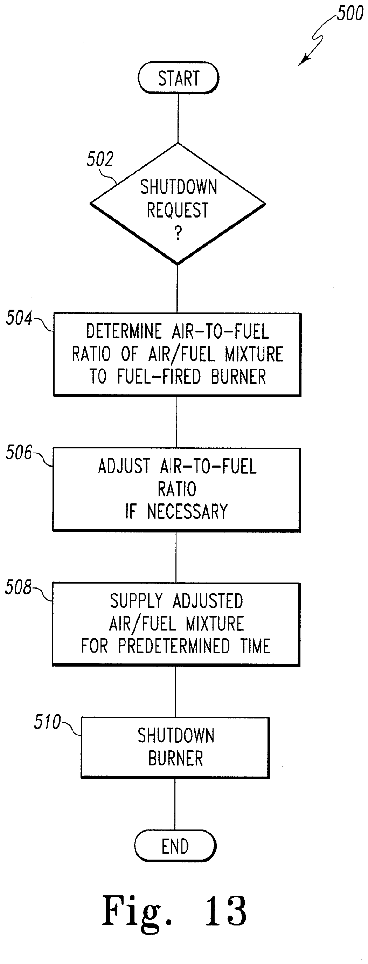

FIG. 13 shows an illustrative control routine 500 that can be executed by the electronic controller 104 to combust matter accumulated on the electrodes 28, 30. Operation 502 determines if a shutdown request has been made. If so, the control routine 500 performs operation 504, which determines the air-to-fuel ratio of the air/fuel mixture being supplied to the burner 96. After the air-to-fuel ratio is determined, operation 506 is performed which adjusts the air-to-fuel ratio of the air/fuel mixture being supplied to the burner if adjustment is required. If the air-to-fuel ratio requires adjustment to a greater-than-stoichiometric ratio, the adjustment can be performed by reducing the amount of fuel being supplied to the burner 96 and/or through supplying oxygen from the air supply 112.

After adjustment, or if none is necessary, operation 508 is performed, which operates the burner 96 for a predetermined amount of time allowing the soot, or other matter, to be burned off the surfaces of the sparking electrodes 28, 30. It should be appreciated that increasing the air-to-fuel ratio may physically move the flame in the combustion chamber such that it moves towards the electrodes 28, 30, which can burn of soot or other matter accumulated on the electrode surfaces. After the predetermined amount of time has elapsed, operation 510 is performed to shutdown the burner 96, which can be done using the electronic controller 104.

## Claims

1. A method of operating an emission abatement system comprising a selective catalytic reduction (SCR) catalyst, the method comprising:
supplying fuel to a fuel-fired burner (16) positioned upstream of the SCR catalyst (42) to heat exhaust gas being advanced to the SCR catalyst (42),
**characterized by**
determining a flow rate of exhaust gas flowing through the burner (16) determining a temperature of the exhaust gas at an inlet of the burner (16),
predicting an amount of fuel to be further supplied to the burner (16) based upon the flow rate of exhaust gas flowing through the burner (16) and based on the temperature of the exhaust gas at the inlet of the burner, and
supplying the predicted amount of fuel to the burner (16).

2. The method of claim 1, further comprising determining a flow rate of fuel being supplied to the burner (16) for predicting the amount of fuel to be further supplied to the burner.

3. The method of claim 1, wherein predicting the amount of fuel to be further supplied to the burner (16) based upon the temperature of the exhaust gas at the inlet of the burner comprises predicting the amount of fuel to be further supplied to the burner (16) using a Smith predictor control strategy having an integral of a determined flow rate of fuel as an input variable thereof.

4. The method of claim 3, wherein predicting the amount of fuel to be further supplied to the burner (16) based upon the temperature of the exhaust gas at the inlet of the burner comprises predicting the amount of fuel to be further supplied to the burner (16) using a bang-bang control strategy having an integral of a determined flow rate of fuel as an input variable thereof.

5. An emission abatement assembly comprising:
a selective catalytic reduction (SCR) catalyst,
a fuel fired burner (16) positioned upstream of the SCR catalyst (42) and operable to heat exhaust gas being advanced to the SCR catalyst (42),
a first sensor (125) configured to determine a flow rate of fuel being supplied to the burner (16) and generate a response thereto,
an electronically-controlled fuel delivery assembly (34, 39) operable to deliver fuel to the burner (16), and
a controller electrically coupled to the fuel delivery assembly, the controller comprising (i) a processor(104), and (ii) a memory device (108) electrically coupled to the processor, the memory device having stored therein a plurality of instructions to be executed by the processor,
**characterized by**
a second sensor (128) configured to determine a flow rate of exhaust gas flowing through the burner (16) and generating a response thereto,
a third sensor(130) configured to determine a temperature of the exhaust gas at the inlet of the burner (16) and generating a response thereto,
wherein said plurality of instructions cause the processor to:
determine a flow rate of fuel based upon a signal generated by the first sensor (125), determine a flow rate of the exhaust gas based upon a signal generated by the second sensor (128), and determine the temperature of exhaust gas at the inlet of the burner (16) based on the signal generated by the third sensor (130),
predict an amount of fuel to be further supplied to the burner (16) based upon the determined flow rate of fuel, based on the determined flow rate of exhaust gas through the burner (16), and based on the determined temperature of the exhaust gas at the inlet of the burner (16), and
operate the fuel delivery assembly (34, 39) to supply the predicted amount of fuel to the burner (16).

6. The emission abatement assembly of claim 5, wherein the plurality of instructions, when executed by the processor further cause the processor to:
integrate the determined flow rate of fuel, and
predict the amount of fuel to be further supplied to the burner (16) using a fuzzy logic control strategy having an integral of the determined flow rate of fuel as an input variable.

7. The emission abatement assembly of claim 5 further comprising a fourth sensor (140) configured to determine a temperature of the SCR catalyst (42) and generate a signal in response thereto, wherein the plurality of instructions, when executed by the processor, further cause the processor to:
determine the temperature of the SCR catalyst (42) based upon the signal generated by the fourth sensor (140), and operate the fuel delivery system to supply fuel to the burner (16) based upon the temperature of the SCR catalyst (42).

## Patentansprüche

1. Verfahren zum Betreiben eines Emissionsminderungssystems, das einen Katalysator mit selektiver katalytischer Reduktion (SCR-Katalysator) umfasst, wobei das Verfahren Folgendes umfasst:
Zuführen von Kraftstoff zu einem kraftstoffbetriebenen Brenner (16), der stromaufwärts des SCR-Katalysators (42) angeordnet ist, um Abgas zu erwärmen, das zu dem SCR-Katalysator (42) vorbewegt wird,
**gekennzeichnet durch**
Bestimmen eines Durchsatzes an durch den Brenner (16) strömendem Abgas,
Bestimmen einer Temperatur des Abgases an einem Einlass des Brenners (16),
Vorhersagen einer dem Brenner (16) weiter zuzuführenden Kraftstoffmenge auf der Grundlage des Durchsatzes an durch den Brenner (16) strömendem Abgas und auf der Grundlage der Temperatur des Abgases am Einlass des Brenners, und
Zuführen der vorhergesagten Kraftstoffmenge zum Brenner (16).

2. Verfahren nach Anspruch 1, bei dem ferner ein Durchsatz an Kraftstoff bestimmt wird, der dem Brenner (16) zugeführt wird, um die dem Brenner weiter zuzuführende Kraftstoffmenge vorherzusagen.

3. Verfahren nach Anspruch 1, bei dem das Vorhersagen der dem Brenner (16) auf der Grundlage der Temperatur des Abgases am Einlass des Brenners weiter zuzuführenden Kraftstoffmenge das Vorhersagen der dem Brenner (16) weiter zuzuführenden Kraftstoffmenge unter Verwendung einer Smith-Prädiktor-Regelstrategie mit einem Integral eines bestimmten Kraftstoffdurchsatzes als Eingangsgröße davon umfasst.

4. Verfahren nach Anspruch 3, bei dem das Vorhersagen der dem Brenner (16) auf der Grundlage der Temperatur des Abgases am Einlass des Brenners weiter zuzuführenden Kraftstoffmenge das Vorhersagen der dem Brenner (16) weiter zuzuführenden Kraftstoffmenge unter Verwendung einer Zweipunktregelstrategie mit einem Integral eines bestimmten Kraftstoffdurchsatzes als Eingangsgröße davon umfasst.

5. Emissionsminderungsbaugruppe mit:
einem Katalysator mit selektiver katalytischer Reduktion (SCR-Katalysator),
einem stromaufwärts des SCR-Katalysators (42) angeordneten, kraftstoffbetriebenen Brenner (16), der so betreibbar ist, dass er Abgas erwärmt, das zu dem SCR-Katalysator (42) vorbewegt wird,
einem ersten Sensor (125), der so ausgebildet ist, dass er einen Durchsatz an dem Brenner (16) zugeführtem Kraftstoff bestimmt und eine Reaktion darauf erzeugt,
einer elektronisch gesteuerten Kraftstoffabgabebaugruppe (34, 39), die so betreibbar ist, dass sie Kraftstoff an den Brenner (16) abgibt, und
einer Steuereinheit, die mit der Kraftstoffabgabebaugruppe elektrisch verbunden ist, wobei die Steuereinheit i) einen Prozessor (104) und ii) eine Speichervorrichtung (108) umfasst, die mit dem Prozessor elektrisch verbunden ist, wobei in der Speichervorrichtung mehrere vom Prozessor auszuführende Befehle gespeichert sind,
**gekennzeichnet durch**
einen zweiten Sensor (128), der so ausgebildet ist, dass er einen Durchsatz an durch den Brenner (16) strömendem Abgas bestimmt, und eine Reaktion darauf erzeugt,
einen dritten Sensor (130), der so ausgebildet ist, dass er eine Temperatur des Abgases am Einlass des Brenners (16) bestimmt, und eine Reaktion darauf erzeugt,
wobei die mehreren Befehle den Prozessor dazu veranlassen:
auf der Grundlage eines vom ersten Sensor (125) erzeugten Signals einen Kraftstoffdurchsatz zu bestimmen, auf der Grundlage eines vom zweiten Sensor (128) erzeugten Signals einen Durchsatz des Abgases zu bestimmen und auf der Grundlage des vom dritten Sensor (130) erzeugten Signals die Abgastemperatur am Einlass des Brenners (16) zu bestimmen,
auf der Grundlage des bestimmten Kraftstoffdurchsatzes, auf der Grundlage des bestimmten Abgasdurchsatzes durch den Brenner (16) und auf der Grundlage der bestimmten Temperatur des Abgases am Einlass des Brenners (16) eine dem Brenner (16) weiter zuzuführende Kraftstoffmenge vorherzusagen, und
die Kraftstoffabgabebaugruppe (34, 39) so zu betreiben, dass sie dem Brenner (16) die vorhergesagte Kraftstoffmenge zuführt.

6. Emissionsminderungsbaugruppe nach Anspruch 5, bei der die mehreren Befehle bei Ausführung durch den Prozessor den Prozessor ferner dazu veranlassen:
den bestimmten Kraftstoffdurchsatz zu integrieren und
unter Verwendung einer Fuzzy-Logik-Regelstrategie mit einem Integral des bestimmten Kraftstoffdurchsatzes als Eingangsgröße die dem Brenner (16) weiter zuzuführende Kraftstoffmenge vorherzusagen.

7. Emissionsminderungsbaugruppe nach Anspruch 5, ferner mit einem vierten Sensor (140), der so ausgebildet ist, dass er eine Temperatur des SCR-Katalysators (42) bestimmt und als Reaktion darauf ein Signal erzeugt, wobei die mehreren Befehle bei Ausführung durch den Prozessor den Prozessor ferner dazu veranlassen:
die Temperatur des SCR-Katalysators (42) auf der Grundlage des vom vierten Sensor (140) erzeugten Signals zu bestimmen und das Kraftstoffabgabesystem so zu betreiben, dass es auf der Grundlage der Temperatur des SCR-Katalysators (42) dem Brenner (16) Kraftstoff zuführt.

## Revendications

1. Procédé de mise en oeuvre d'un système de réduction d'émissions comprenant un catalyseur à réduction catalytique sélective (RCS), le procédé comprenant :
l'amenée de carburant à un brûleur alimenté en carburant (16) qui agencé en amont du catalyseur RCS (42) pour chauffer des gaz d'échappement avancés vers le catalyseur RCS (42),
**caractérisé par**
la détermination d'un débit des gaz d'échappement traversant le brûleur (16),
la détermination d'une température des gaz d'échappement à une entrée du brûleur (16),
la prédiction d'une quantité de carburant devant encore être amenée au brûleur (16) sur la base du débit des gaz d'échappement traversant le brûleur (16) et sur la base de la température des gaz d'échappement à l'entrée du brûleur, et
l'amenée de la quantité de carburant prédite au brûleur (16).

2. Procédé selon la revendication 1, comprenant en outre la détermination d'un débit de carburant amené au brûleur (16) pour prédire la quantité de carburant devant encore être amenée au brûleur.

3. Procédé selon la revendication 1, la prédiction de la quantité de carburant devant encore être amenée au brûleur (16) sur la base de la température des gaz d'échappement à l'entrée du brûleur comprenant la prédiction de la quantité de carburant devant encore être amenée au brûleur (16) en utilisant une stratégie de commande à prédicteur de Smith présentant une intégrale d'un débit de carburant déterminé en tant que variable d'entrée de celle-ci.

4. Procédé selon la revendication 3, la prédiction de la quantité de carburant devant encore être amenée au brûleur (16) sur la base de la température des gaz d'échappement à l'entrée du brûleur comprenant la prédiction de la quantité de carburant devant encore être amenée au brûleur (16) en utilisant une stratégie de commande par tout ou rien présentant une intégrale d'un débit de carburant déterminé en tant que variable d'entrée de celle-ci.

5. Ensemble de réduction d'émissions, comprenant :
un catalyseur à réduction catalytique sélective (RCS),
un brûleur alimenté en carburant (16) qui agencé en amont du catalyseur RCS (42) et qui est apte à être mis en oeuvre pour chauffer des gaz d'échappement avancés vers le catalyseur RCS (42),
un premier capteur (125) réalisé pour déterminer un débit de carburant amené au brûleur (16) et générer une réponse à cela,
un ensemble de fournissement de carburant (34, 39) à commande électronique apte à être mis en oeuvre pour fournir du carburant au brûleur (16), et
un contrôleur couplé électriquement à l'ensemble de fournissement de carburant, le contrôleur comprenant (i) un processeur (104) et (ii) un dispositif de stockage (108) couplé électriquement au processeur, le dispositif de stockage présentant stockées dans celui-ci plusieurs instructions à exécuter par le processeur,
**caractérisé par**
un deuxième capteur (128) réalisé pour déterminer un débit des gaz d'échappement traversant le brûleur (16), et générant une réponse à cela,
un troisième capteur (130) réalisé pour déterminer une température des gaz d'échappement à l'entrée du brûleur (16), et générant une réponse à cela,
les plusieurs instructions amenant le processeur :
à déterminer un débit de carburant sur la base d'un signal généré par le premier capteur (125), à déterminer un débit des gaz d'échappement sur la base d'un signal généré par le deuxième capteur (128), et à déterminer la température des gaz d'échappement à l'entrée du brûleur (16) sur la base du signal généré par le troisième capteur (130),
à prédire une quantité de carburant devant encore être amenée au brûleur (16) sur la base du débit de carburant déterminé, sur la base du débit déterminé des gaz d'échappement à travers le brûleur (16), et sur la base de la température déterminée des gaz d'échappement à l'entrée du brûleur (16), et
à mettre en oeuvre l'ensemble de fournissement de carburant (34, 39) pour amener la quantité de carburant prédite au brûleur (16).

6. Ensemble de réduction d'émissions selon la revendication 5, dans lequel les plusieurs instructions, lorsqu'elles sont exécutées par le processeur, amènent en outre le processeur :
à intégrer le débit de carburant déterminé, et
à prédire la quantité de carburant devant encore être amenée au brûleur (16) en utilisant une stratégie de commande à logique floue présentant une intégrale du débit de carburant déterminé en tant que variable d'entrée.

7. Ensemble de réduction d'émissions selon la revendication 5, comprenant en outre un quatrième capteur (140) réalisé pour déterminer une température du catalyseur RCS (42) et générer un signal en réponse à cela, les plusieurs instructions, lorsqu'elles sont exécutées par le processeur, amenant en outre le processeur :
à déterminer la température du catalyseur RCS (42) sur la base du signal généré par le quatrième capteur (140) et à mettre en oeuvre le système de fournissement de carburant pour amener du carburant au brûleur (16) sur la base de la température du catalyseur RCS (42).
